# EUROPEAN PATENT SPECIFICATION

(11) **EP 2 704 823 B1**
(45) Date of publication and mention of the grant of the patent: **28.01.2015**
(21) Application number: 12726750.8
(22) Date of filing: 30.04.2012
(51) Int. Cl.: B01J 19/18, B04B 5/06, B01F 5/22

(54) **DEVICE FOR MULTIPHASE AND SINGLE PHASE CONTACTING**
VORRICHTUNG FÜR MEHRPHASIGE UND EINPHASIGE KONTAKTIERUNG
DISPOSITIF DE MISE EN CONTACT MULTIPHASE ET MONOPHASE

(30) Priority: 02.05.2011 US 201161518177 P
(43) Date of publication of application: 12.03.2014
(73) Proprietor: Technische Universiteit Eindhoven, 5612 AZ Eindhoven (NL)
(72) Inventor: VAN DER SCHAAF, John, NL-3332 BE Zwijndrecht (NL); VISSCHER, Frans, NL-5625 SV Eindhoven (NL); BINDRABAN, Dipnarain, NL-5045 PS Tilburg (NL); SCHOUTEN, Jacob C., NL-5384 BG Heesch (NL)
(74) Representative: Quinlan, Angela
(86) International application number: PCT/EP2012/057934
(87) International publication number: WO 2012/150226

(56) References cited:
- EP-A2- 0 023 745
- WO-A1-2006/008500
- GB-A- 2 108 407
- US-A1- 2007 287 806

## Description

### FIELD OF THE INVENTION

The present invention relates generally to chemical multiphase processes. More particularly, the invention relates to a device for countercurrent multiphase contacting, which integrates a centrifugal separation and countercurrent mass transfer.

### BACKGROUND OF THE INVENTION

In the chemical industry, 80-90% of all industrial processes involve multiphase contacting. A predominant part of these processes are found in affinity-difference based separation. This is an important method for purification of raw resources and product streams. Examples of this are distillation (gas-liquid phase), crystallization (liquid-solid phase, solid-liquid-solid phase, gas-liquid-solid phase) and extraction with an immiscible liquid (liquid-liquid) or solid adsorbent (liquid-solid). As indicated between the parentheses for these examples, generally two or more aggregation phases (gas, liquid, solid, or mixtures thereof) are present, which are counter-currently contacted in these processes. The countercurrent flow is accomplished through the density difference of the different phases involved and gravitational acceleration. The countercurrent contacting of the phases is vital for the process efficiency. Another important part of multiphase processes are multiphase reactors, usually employed when poorly soluble and often very reactive gases are the reactant or product. For multiphase reactions that are product inhibited or equilibrium determined, countercurrent contacting of the phases is essential for process efficiency. The remaining part of multiphase reactions can be operated cocurrently almost equally efficient. For all separation processes and the majority of multiphase reactions, the mass transfer rate determines the process efficiency and process design. In conventional equipment, such as packed columns or tray columns, the mass transfer rate is low, which leads to large equipment, easily ten to hundred meters high and several meters in diameter.

An increase in mass transfer rate directly translates into smaller equipment with increased efficiency of materials and a reduction of energy consumption, which leads to a reduction in operating and investment costs. In more sophisticated equipment, for example equipment by CINC or Rousselet-Robatel, a higher mass transfer is achieved by first intense mixing of the phases followed by a centrifugal separation. The intense mixing step generally makes a fine dispersion with high mass transfer that will bring the phases close to the equilibrium position. For most extractions, several (10-100) equilibrium steps are desired. Therefore, after the centrifugal separation, the phases are pumped to the next stages, in a countercurrent fashion. The CINC process is then in essence a repetition of units. A multistage process rapidly increases in size with an increase in number of stages. Furthermore, the centrifuge separation unit is large when compared to the mixing stage. Rousselet-Robatel integrated a similar system on a single axis without the intense mixing step but with a smaller centrifuge stage. In another example, Ramshaw used spinning discs for generating thin films with high surface area for highly efficient contacting of gas and liquid in a single stage, and gravity for establishing countercurrent flow between stages with a paring tube, similar to a system by Alfa Laval.

What is needed is an efficient and compact countercurrent device for multiphase and single phase contacting.

### SUMMARY OF THE INVENTION

To address the needs in the art a multiphase contacting stage is provided that includes a first rotatable disc having a hollow disc-shaped cavity, an input port and an output port, and a second rotatable disc having a channeled cavity, an input port and an output port, where the second rotatable disc is disposed in the hollow disc-shaped cavity of the first rotatable disc, where the first rotatable disc and the second rotatable disc are concentric about an axis, where the multiphase contacting stage operates to integrate centrifugal separation and countercurrent mass transfer of a material for separation.

In one aspect of the invention, the first rotatable disc and the second rotatable disc rotate about the axis and are spaced apart on the axis at a distance as low as 0.05 mm.

According to another aspect of the invention, the first rotatable disc and the second rotatable disc rotate at a speed up to 5000 rpm.

In a further aspect of the invention, the first rotatable disc and the second rotatable disc are co-rotating or counter-rotating.

In yet another aspect of the invention, the first rotatable disc rotates at a first speed and a second rotatable disc rotates at a second speed.

According to one aspect of the invention, a first contacting stage is stacked on at least one other the contacting stage, where the material for separation commutes between the stacked contacting stages through the input ports and the output ports.

In a further aspect of the invention, the first rotatable disc and the second rotatable disc are disposed to generate a centrifugal acceleration of the material for separation within the contacting device when the first rotatable disc and the second rotatable disc rotate.

In another aspect of the invention, the first rotatable disc includes a gas input port.

In yet another aspect of invention, the channels in the second rotatable disc are disposed to separate a relatively light phase from a relatively heavy phase in the material for separation, where the relatively light phase moves towards the axis of rotation, where the relatively heavy phase moves radially outwards.

According to another aspect of the invention, the rotation speed depends on properties of the material for separation, the disc radii, and the disc spacing.

In a further aspect of the invention, the first rotatable disc has heat transfer channels.

In yet another aspect of the invention, a rotor is disposed between the first rotatable disc and the second rotatable disc.

According to one aspect of the invention, the second rotatable disc comprises a pair of concentric disc plates separated by the walls of the channels. In one aspect, the opposing disc plates have a separation distance as low as 0.05 mm. Further, the opposing disc plates have the same diameter or different diameters.

According to one aspect of the invention, the channels have a linear or non-linear shape extending radially outward.

In yet another aspect of the invention, the first rotatable disc includes a heat input port.

In a further aspect of the invention, the first rotatable disc includes a first charge polarity and the second rotatable disc comprises a second charge polarity, where the first charge polarity is opposite the second charge polarity.

In a further aspect of the invention, a surface of the first disc and/or a surface of the second disc includes a catalyst. In one aspect, the disc surface includes microstructures.

### BRIEF DESCRIPTION OF THE FIGURES

- **FIGs. 1a-1b**: show computer renderings of a hollow pumping disc without an axis, according to one embodiment of the invention.

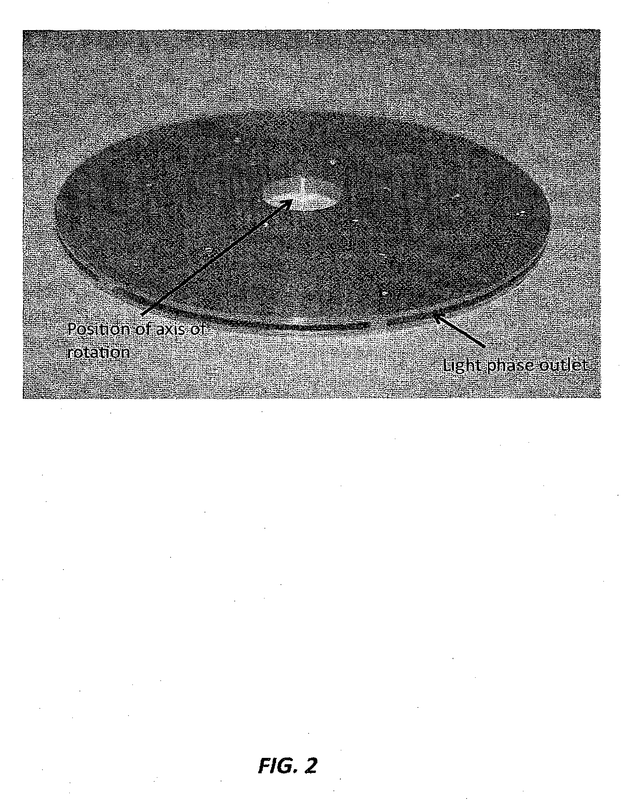

- **FIG. 2**: shows an image of a hollow pumping disc without an axis, according to one embodiment of the invention.
- **FIG. 3**: shows a single contacting stage, according to one embodiment of the invention.

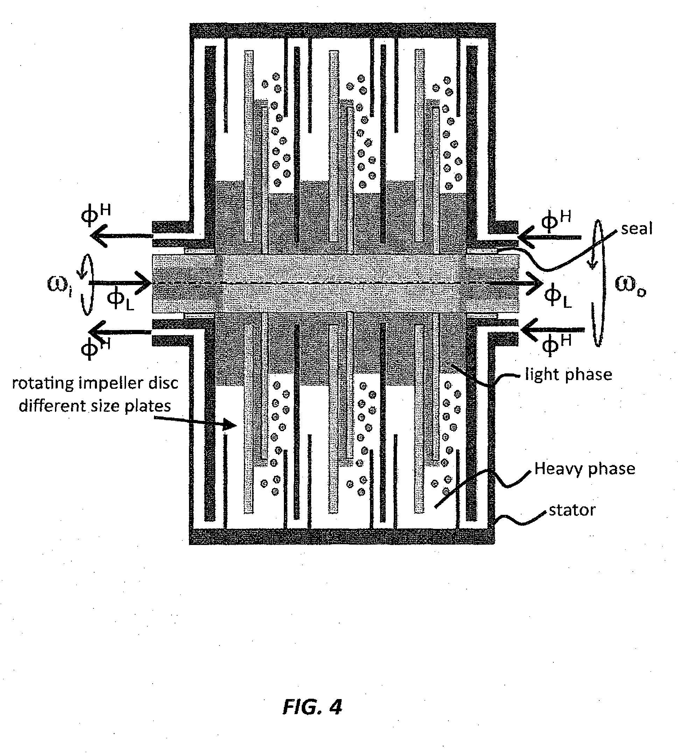

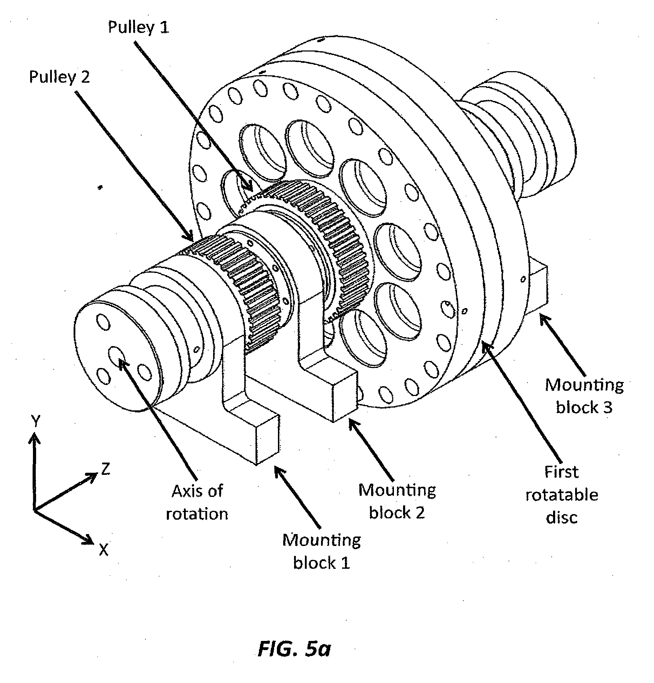

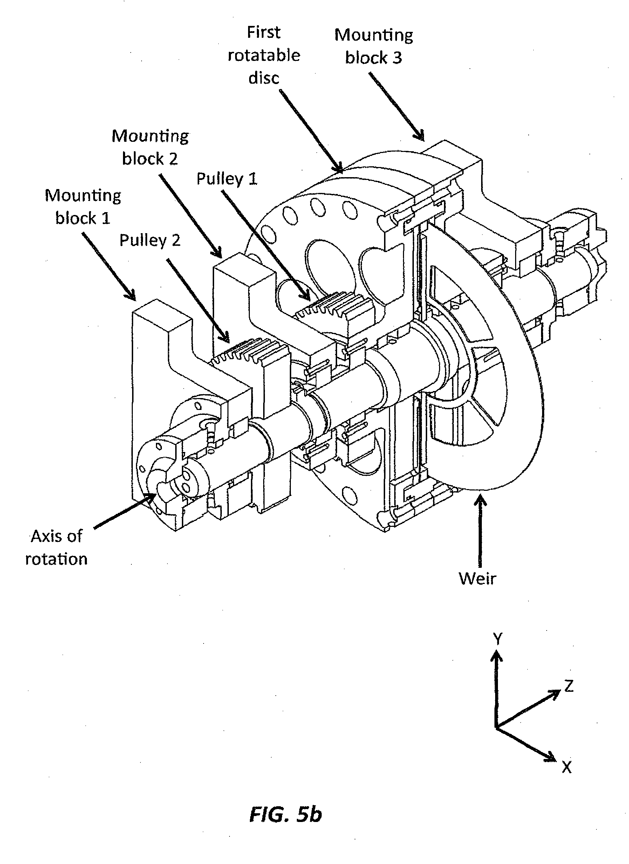

- **FIG. 4**: shows multiple contacting stages, according to one embodiment of the invention.
- **FIGs**. **5a**-**5b**: show constructional drawings of three dimensional single stage contactor, according to one embodiment of the invention.
- **FIGs. 6a**-**6b**: show cross section drawings of the y-z plane of **FIGs**. **5a**-**5b**, showing a single stage contactor, according to one embodiment of the invention and a close up of the single stage contactor
- **FIGs**. **7a**-**7d**: show a spiral flow of light phase (heptane, white) in heavy phase (water, grey) towards the centre of the disc for disc speeds between 50 and 300 rpm, according to one embodiment of the invention.
- **FIGs**. **7e-7f**: shows emulsified flow of heptane in water at rotation speeds above 500 rpm, according to one embodiment of the invention.

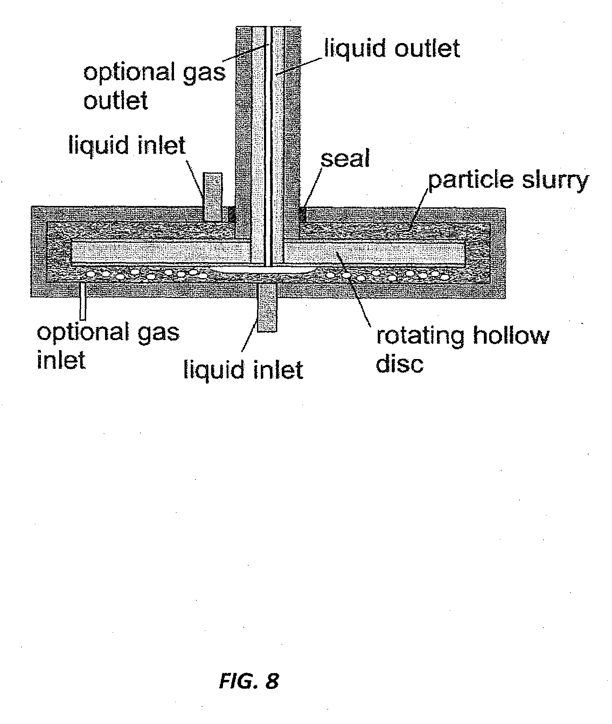

- **FIG. 8**: shows a single stage Spinning Disc Slurry Reactor with optional gas feed, according to one embodiment of the invention.

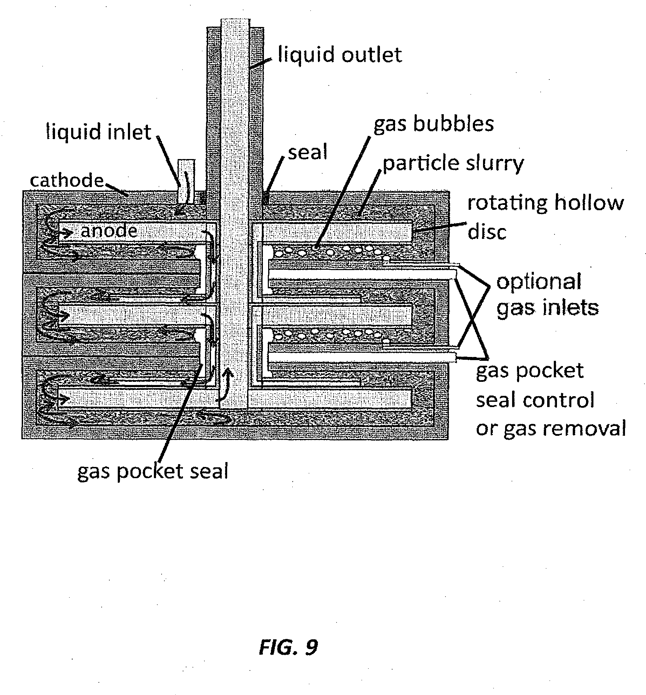

- **FIG. 9**: shows a multistage spinning disc slurry reactor with optional gas inlets, according to one embodiment of the invention.

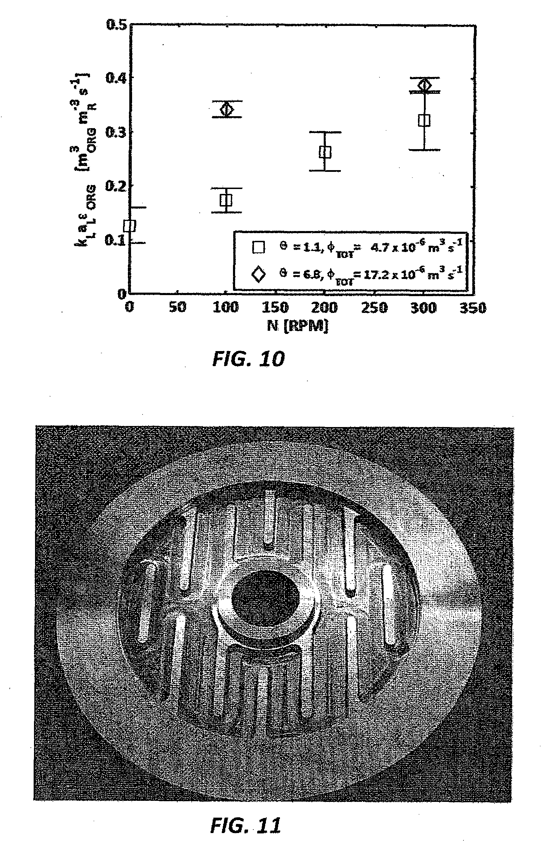

- **FIG. 10**: shows liquid-liquid mass transfer rates in a rotor stator spinning disc reactor, according to one embodiment of the invention.
- **FIG. 11**: shows a stator having channels, where cooling or heating liquid flows, which allows for heat transfer, according to one embodiment of the invention.

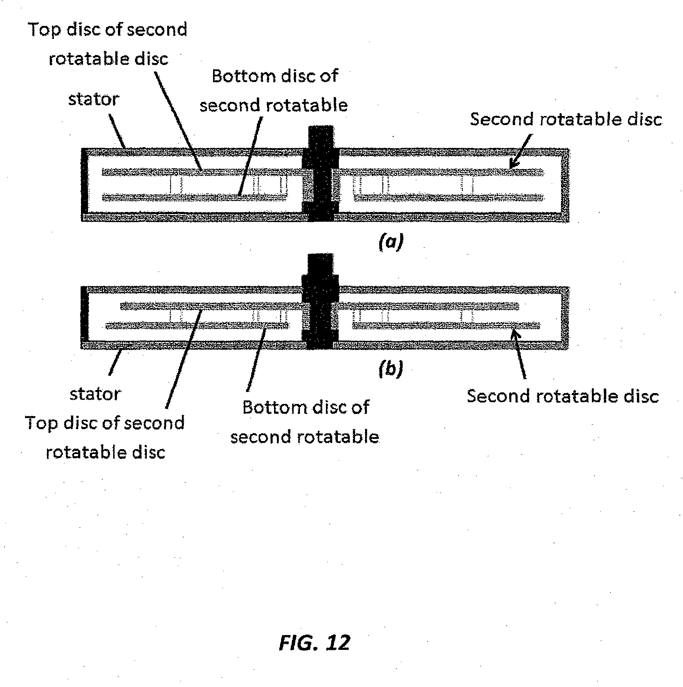

- **FIGs. 12a-12b**: show two different pumping disc configurations, where the top disc and bottom disc of the pumping disc have equal or different diameters, according to further embodiments of the invention.

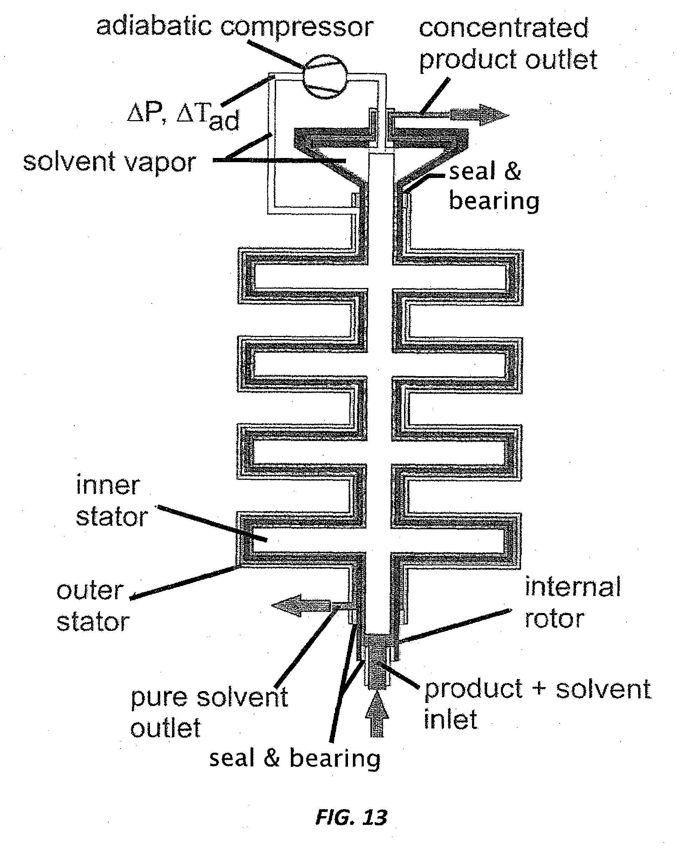

- **FIG. 13**: shows a multistage evaporation device that uses the high heat transfer rates on both sides of the internal rotor for efficient heat transfer between the evaporating liquid on the inner side of the rotor and the condensation of the evaporated vapor on the outer side of the rotor, according to one embodiment of the invention.

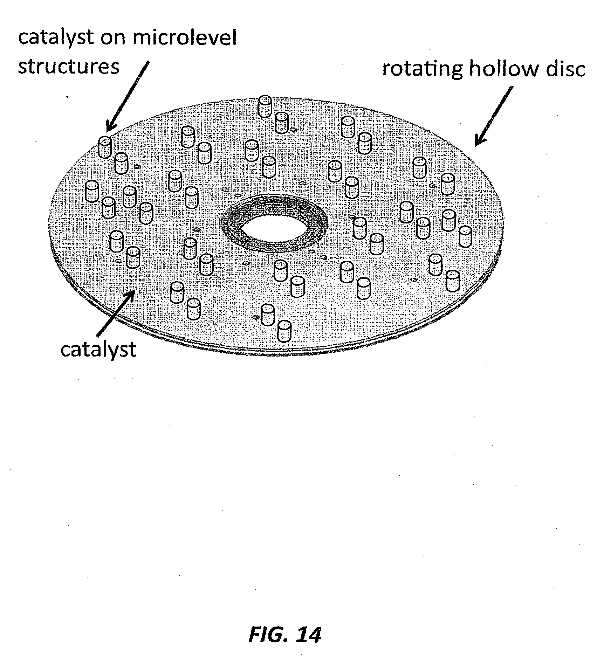

- **FIG. 14**: shows a catalyst deposited the disc, where the disc includes microlevel pillars the surface a disc, according to one embodiment of the invention.

### DETAILED DESCRIPTION OF THE INVENTION

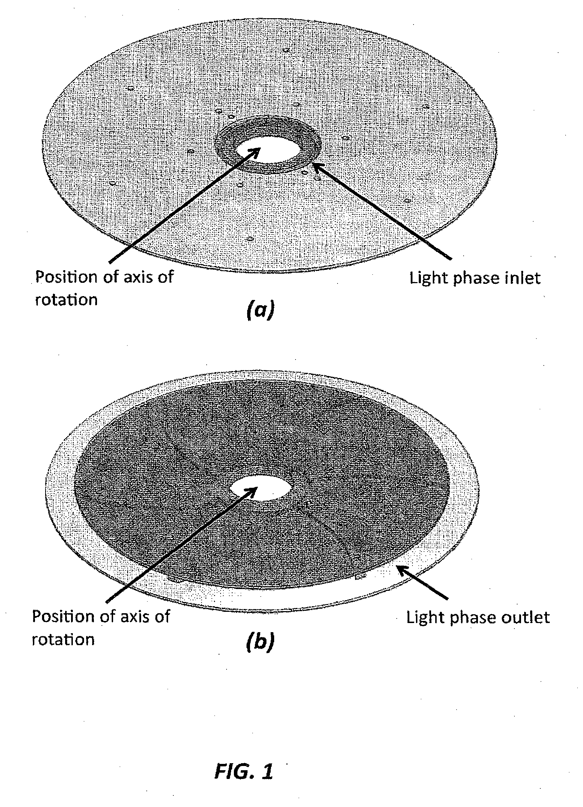

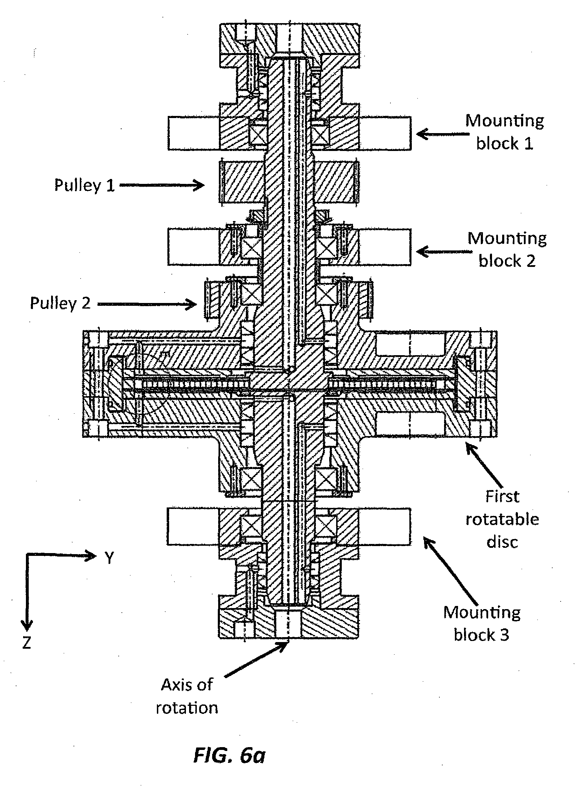

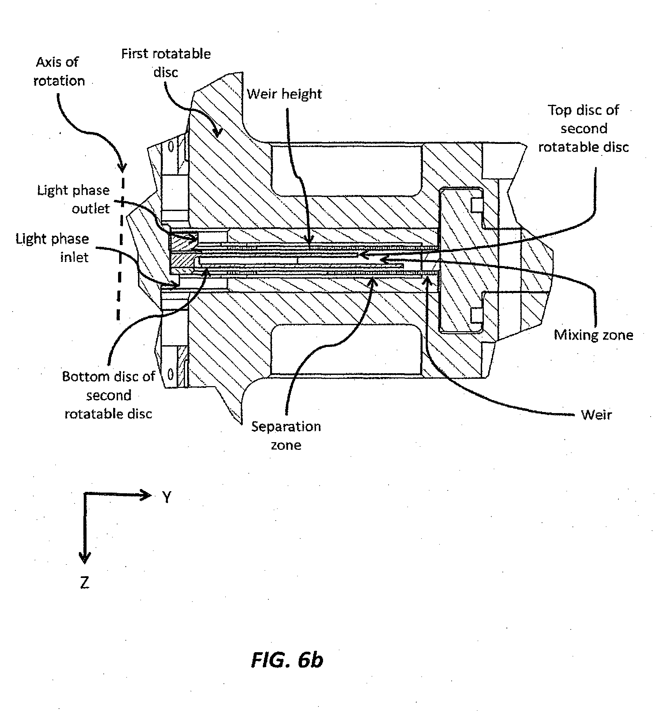

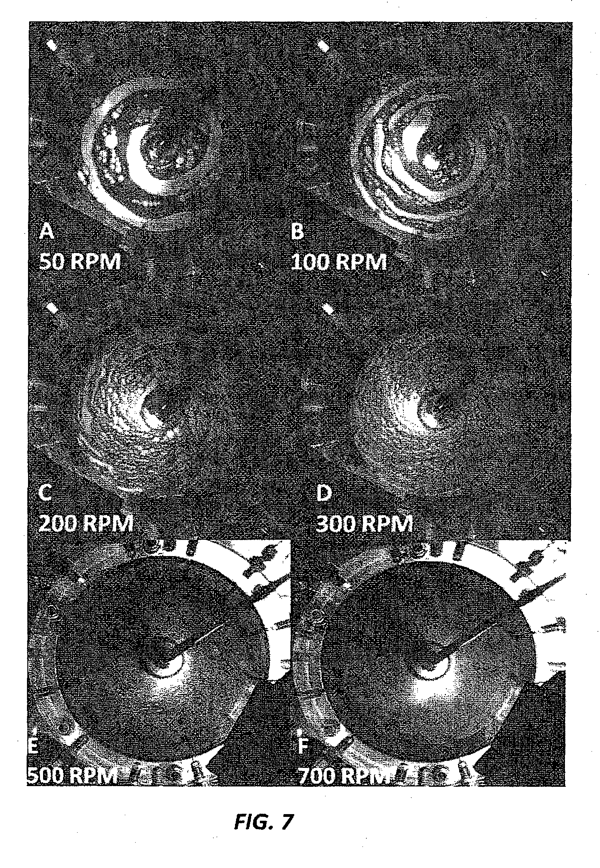

One embodiment of the current invention includes a device for countercurrent multiphase contacting, which has closely spaced rotating discs, preferably a spacing of 5 mm or less, more preferably a spacing of 2 mm or less and possibly even more preferable a spacing of 0.05 mm, that have individual rotation speeds up to 5000 rpm for each disc, where each disc is individually co-rotating or counter-rotating with respect to the other discs. A collection of two or more discs forms a contacting stage. The rotation generates a centrifugal acceleration that separates the phases in a single stage, the light phase moves towards the axis of rotation, the heavy phase moves radially outwards. The discs are disposed in such a way that countercurrent contacting takes place in this stage but also takes place from stage to stage. To this end, a hollow disc (see **FIG. 1b** (bottom view) and **FIG. 1a** (top view)) is used that pumps the light phase from the centre of the axis of a stage to the outside of a disc in the next stage, (see **FIGs**. **3** through **FIG. 6** for mechanical drawings). The heavy phase flows along the axis to the previous stage by pressure difference and continuity. The small gap between the rotating discs and the difference in rotation speed leads to high mass transfer rates at already low rotation speeds between 0 to 300 rpm. This has been demonstrated for the extraction of benzoic acid from n-heptane to water. At low rotation speeds spirals of light phase are formed. Only at high rotation speeds above 300 rpm a dispersion of small droplets of n-heptane is formed in water. These droplets also move in a spiral motion to the center. In **FIGs. 7a-7f** the observed flow regimes are given. Dark indicates the water phase; light indicates the n-heptane phase. The dispersed flow has a higher mass transfer than the spiral flow because of the increased contact area between the two liquids and the increased turbulence in the system. The overall mass transfer coefficient is given in **FIG. 10****.** From a mass transfer point of view it seems attractive to go to high rotation speeds. However, the small droplets at high rotation speeds are more difficult to separate from the water phase than the large spiral structures at low rotation speeds. Incomplete separation of the phases greatly reduces the extraction efficiency. Also, at high rotation speeds with small droplets the turbulence in the system causes more backmixing and the countercurrent contacting is partially lost. Therefore, a lower difference in rotation speeds of the discs is preferred. The optimal rotation speed, in terms of high mass transfer, preservation of countercurrent plug flow behavior, and energy consumption, will depend on fluid properties, the disc radii, and the disc spacing.

In combination with the countercurrent contacting and separation at least a tenfold increased extraction efficiency is found in the current invention, compared with centrifugal equipment and a ten-to-hundredfold increase is found compared with conventional equipment.

An additional benefit of the invention is that a factor ten lower volume fraction is found for the dispersed phase when the material for separation is a gas. This makes one embodiment of the current invention suited for the safe use of hazardous/explosive gas mixtures in reactive processes. The small gas volume greatly reduces the impact of a calamity and the small disc spacing thwarts detonation of the gas mixture.

An important required functionality for a reactor is the possibility to add or remove heat efficiently. In the case of the current invention, the heat transfer rate from the fluids in between the rotor and the stator is extremely high compared to heat transfer rates in conventional equipment, easily up to a factor of one hundred higher, in the range of 20-100 kW/m²/s. The stator may contain channels, where cooling liquid flows, which allows for heat transfer, these channels are shown in **FIG. 11****.** The heat transfer rate in the channels with the heat transfer fluid is then the limiting step of the heat transfer, with its conventional low heat transfer rate. When required, the heat transfer rate can be further improved by including a rotor in the heat transfer fluid side. This configuration can be used for very energy efficient removal of solvents, e.g. water, toluene, trichloroethylene, or volatile products from process streams, see **FIG. 13****.** On the inner (or outer) side of the apparatus the process stream flows. Heat is added from the other side, causing the liquid to heat up and start evaporating. The vapor and liquid co-currently flow towards the outlet. At the outlet the vapor and purified liquid process streams are separated by centrifugal force. The vapor is compressed adiabatically to supersaturated conditions at a higher pressure and temperature, and is fed counter-currently to the other side. The vapor phase will start condensing, thus providing the latent heat of evaporation at a higher temperature until the vapor is fully condensed. The heat in the hot condensed vapor is further used to heat the process flow. In one embodiment, it is desirable or even essential that the inner flow is upwards and the outer flow is downwards. If this is reversed, the liquid phase does not have continuous contact with the rotor and is erratically accelerated. This will give a strongly varying torque on the motor and will quickly lead to mechanical breakdown. According to one embodiment of the invention, the heat of the purified liquid process is optionally used for heating the process stream. Thus the latent heat of vaporization and the sensible heat is almost fully recuperated. The only power consumption in the process is by the compressor and the motor driving the axis of the invention (∼500-1500 W). The process is most efficiently operated at the highest allowable pressure and thus temperature. The high pressure does not lead to a significant increase in equipment costs as expected for conventional equipment, because the volume of the invention is so small (the process in **FIG. 13** has a volume of ∼10⁻⁴ m³).

The invention can also be applied as a slurry reactor, i.e. a reactor in which a fluid contains the reactants and in addition particles that are dispersed and catalyze the reaction heterogeneously. A schematic drawing of the spinning disc slurry reactor is given in **FIG. 8** and **FIG. 9****.** In a single stage, a hollow disc is rotating fast in between two stator discs that form a cavity. The spacing between the rotating disc and the stator is typically 1 mm. The spacing in the hollow disc is also 1 mm. The liquid in the cavity contains catalyst particles. The liquid is well mixed and no significant segregation of particles is found (based on experiments with single particles and liquid-liquid systems). The liquid reactants are fed near the axis on top and/or bottom. The heterogeneously catalyzed reaction takes place in the slurry. The liquid leaves the reactor through the hollow disc. The centrifugal force effectively separates catalyst particles from the slurry. The catalyst particles are thus retained in the system.

According to a further embodiment of the invention, a gas feed is provided as a reactant or for stripping a product. The slurry step can be repeated several times in a multiple spinning disc configuration disposed on a single rotating axis that will mimic plug flow behavior. The plug flow behavior gives higher conversion and also a higher selectivity in case of serial reactions. The seal between repeating stages is a gas bubble. A gas can be optionally added at each stage. The gas seal can also be a lighter liquid seal, with optional lighter liquid addition. According to a further embodiment of the invention, a multistage Spinning Disc Slurry Reactor is shown in **FIG. 9****.** The impact of the invention is considerable. At 2000 rpm and a disc diameter of 13 cm, a slurry catalyst with extremely small diameters, down to 2 nm can be employed. An overview of the properties of different catalyst systems with 10 volume percent of catalyst particles is given in **TABLE 1.**

**TABLE 1. Catalyst system properties, mass transfer coefficient (kₗₛaₗₛ), and maximum production capacity of a Spinning Disc Slurry Reactor with 1 mm hollow disc spacing operated at 2000 rpm and solids volume fraction of 10%.**

| | particles size (micron) | particle density (kg/m³) | liquid velocity (m/s) | kₗₛaₗₛ (l/s) | production capacity (tonnes/year) |
|---|---|---|---|---|---|
| carbon support | 25 | 1200 | 0.8 | 2.1 | 10x10⁶ |
| alumina support | 2 | 2000 | 0.05 | 300 | 600x10³ |
| nickel particles | 0.2 | 8908 | 4 10⁻³ | 30 10³ | 50x10³ |
| | 0.02 | | 4 10⁻⁵ | 3 10⁶ | 500 |
| Pd/Rh/Ru | 0.02 | 12 10³ | 5 10⁻⁵ | 3 10⁶ | 682 |
| particles | 0.005 | | 2.5 10⁻⁶ | 48 10⁶ | 43 |
| Au particles | 0.002 | 19 10³ | 0.9 10⁻⁶ | 300 10⁶ | 11 |
| Pt particles | 0.002 | 21 10³ | 1.0 10⁻⁶ | 300 10⁶ | 12 |
| Latex (@20,000 rpm) | 0.002 | 1050 | 0.3 10⁻⁶ | 300 10⁶ | 3.2 |

Usually noble metal catalyst particles of 2 to 20 nm are present on catalyst support particles of carbon or alumina of 2x10⁻⁶ to 50x10⁻⁶ m. The reactions are usually fast and require small support particles to prevent diffusion limitations. In the Spinning Disc Slurry Reactor the noble metal particles are freely moving in the liquid and have a good accessibility. The mass transfer coefficient is a million to a hundred million times larger than for the conventional catalyst, ideal for extremely fast reactions. The high heat of reaction that usually accompanies extremely fast reactions is efficiently removed in the apparatus because of the high heat transfer rates that can be achieved, as explained earlier.

The invention can be used as reactor for processes that are sensitive to mixing on a micro scale, like crystallization, polymerization and consecutive and/or parallel competing reactions. The crystal size distribution, molecular weight and/or selectivity and yield of desired reaction products are sensitive for the mixing intensity at this scale. Micromixing times in the range of 10⁻³ to 10⁻⁶ seconds have been realized with rotation speeds up to 2000 rotations per minute and gap distances down to 0.5 mm. Lower mixing times of 10⁻⁷ seconds are realizable in this case but are rarely required in known reactive systems.

In a further embodiment of the invention, a countercurrent multiphase contacting device is provided, which integrates a centrifugal separation and countercurrent mass transfer step. This integration gives an increase in process efficiency and smaller process equipment, a factor 10 to 100 smaller than conventional equipment and a factor 2 to 50 smaller for existing centrifugal equipment. According to one embodiment of the invention, typical micro mixing times are 10⁻³-10⁻⁶ seconds. The reduction in equipment size allows for the process to operate safely and cost effectively at extreme temperatures and pressures. Exotic materials, coatings, and material production/construction processes can be employed without leading to excessive equipment costs.

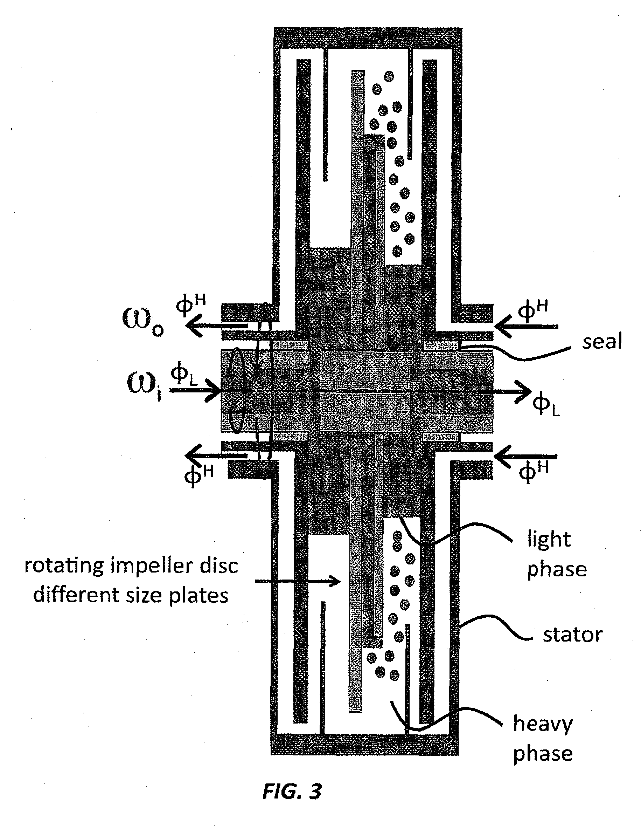

The present invention has now been described in accordance with several exemplary embodiments, which are intended to be illustrative in all aspects, rather than restrictive. Thus, the present invention is capable of many variations in detailed implementation, which may be derived from the description contained herein by a person of ordinary skill in the art. For example, the embodiment of the invention as described in **FIG. 3****,** can include two or more phases, gas, liquid, and/or solid, or any combination thereof, are contacted between two rotating discs in a countercurrent way, where the rotating discs have different or equal rotation speeds. In a further aspect of the embodiment shown in **FIG**. **3****,** at least one of the discs acts as a pumping disc, and is constructed according to a construction of the embodiment shown in **FIG. 12a** and **FIG**. **12b****,** that includes an inlet and an outlet, with equal or non-equal disc diameters. A further variation includes multiple of stages, with a single stage equal to the pumping disc device described above, where the fluids are counter-currently contacted in the single stage and flow counter-currently from stage to stage. In the above variations, a catalyst is deposited on the surface of one or more discs and where the surface may be structured on a microlevel with pillars of 1 to 5 micrometer diameter and up to 50 micrometer length in order to accommodate more catalyst and/or provide more mass transfer, as shown in **FIG. 14****.** In addition to the different velocity discs or pumping disc embodiments, a light and heavy solid phase are formed that move in opposite direction to, respectively, the centre and the perimeter of the rotating discs. Alternatively, a gas phase and a solid phase are formed that move in opposite direction to, respectively, the centre and the perimeter of the rotating discs. A further variation includes a number of discs are cathodes and a number of discs are anodes for the purpose of performing an electrochemical reaction, as shown in **FIG. 9****.**

## Claims

1. A multiphase contacting device, comprising:
a. a first rotatable disc, wherein said first rotatable disc comprises a hollow disc-shaped cavity, an input port and an output port; and
b. a second rotatable disc, wherein said second rotatable disc comprises a channeled cavity, an input port and an output port, wherein said second rotatable disc is disposed in said hollow disc-shaped cavity of said first rotatable disc, wherein said first rotatable disc and said second rotatable disc are concentric about an axis, wherein said multiphase contacting device operates to integrate centrifugal separation and countercurrent mass transfer of a material for separation.

2. The multiphase contacting device of claim 1, wherein
said first rotatable disc and said second rotatable disc rotate about said axis and are spaced apart on said axis at a distance as low as 0.05 mm, or
a rotor is disposed between said first rotatable disc and said second rotatable disc.

3. The multiphase contacting device of claim 1, being configured in one of the following ways:
said first rotatable disc and said second rotatable disc rotate at a speed up to 5000 rpm;
said first rotatable disc rotates at a first speed and a second rotatable disc rotates at a second speed; or
said first rotatable disc and said second rotatable disc are co-rotating or counter-rotating.

4. The multiphase contacting device of claim 1, wherein a first said contacting device is stacked on at least one other said contacting device, wherein said material for separation commutes between said stacked contacting devices through said input ports and said output ports.

5. The multiphase contacting device of claim 1, wherein said first rotatable disc and said second rotatable disc are disposed to generate a centrifugal acceleration of said material for separation within said contacting device when said first rotatable disc and said second rotatable disc rotate.

6. The multiphase contacting device of claim 1, wherein
said first rotatable disc comprises a gas input port, or
said first rotatable disc comprises heat transfer channels.

7. The multiphase contacting device of claim 1, wherein said channels in said second rotatable disc are disposed to separate a relatively light phase from a relatively heavy phase in said material for separation, wherein said relatively light phase moves towards said axis of rotation, wherein said relatively heavy phase moves radially outwards.

8. The multiphase contacting device of claim 1, wherein said rotation speed depends on properties of said material for separation, the disc radii, and the disc spacing.

9. The multiphase contacting device of claim 1, wherein said second rotatable disc comprises a pair of concentric disc plates separated by walls of said channels.

10. The multiphase contacting device of claim 9, wherein said opposing disc plates have a separation distance as low as 0.05 mm.

11. The multiphase contacting device of claim 9, wherein said opposing disc plates have the same diameter or different diameters.

12. The multiphase contacting device of claim 1, wherein said channels comprise a linear or non-linear shape extending radially outward.

13. The multiphase contacting device of claim 1, wherein said first rotatable disc comprises a heat input port.

14. The multiphase contacting device of claim 1, wherein said first rotatable disc comprises a first charge polarity and said second rotatable disc comprises a second charge polarity, wherein said first charge polarity is opposite said second charge polarity.

15. The multiphase contacting device of claim 1, being configured in one of the following ways:
i) a surface of said first disc, ii) a surface of said second disc, or i) and ii) comprise a catalyst; or
said first disc surface or second disc surface comprises microstructures.

## Patentansprüche

1. Mehiphasen-Kontaktierungsvorrichtung, die Folgendes umfasst:
a. eine erste drehbare Scheibe, wobei die erste drehbare Scheibe einen hohlen scheibenförmigen Hohlraum, eine Eingangsöffnung und eine Ausgangsöffnung umfasst; und
b. eine zweite drehbare Scheibe, wobei die zweite drehbare Scheibe einen kannelierten Hohlraum, eine Eingangsöffnung und eine Ausgangsöffnung umfasst, wobei die zweite drehbare Scheibe in dem hohlen scheibenförmigen Hohlraum der ersten drehbaren Scheibe angeordnet ist, wobei die erste drehbare Scheibe und die zweite drehbare Scheibe um eine Achse konzentrisch sind, wobei die Mehrphasen-Kontaktierungsvorrichtung arbeitet, um Zentrifugaltrennung und Gegenstrom-Stoffaustausch eines zu trennenden Materials zu integrieren.

2. Mehiphasen-Kontaktierungsvorrichtung nach Anspruch 1, wobei
die erste drehbare Scheibe und die zweite drehbare Scheibe um die Achse drehen und in einer Entfernung von 0,05 mm oder mehr auf der Achse beabstandet angeordnet sind, oder
ein Rotor zwischen der ersten drehbaren Scheibe und der zweiten drehbaren Scheibe angeordnet ist.

3. Mehiphasen-Kontaktierungsvorrichtung nach Anspruch 1, die auf eine der folgenden Arten konfiguriert ist:
die erste drehbare Scheibe und die zweite drehbare Scheibe drehen mit einer Drehzahl von bis zu 5000 U/min;
die erste drehbare Scheibe dreht mit einer ersten Drehzahl und eine zweite drehbare Scheibe dreht mit einer zweiten Drehzahl; oder
die erste drehbare Scheibe und die zweite drehbare Scheibe drehen gleichläufig oder gegenläufig.

4. Mehrphasen-Kontaktierungsvorrichtung nach Anspruch 1, wobei eine erste Kontaktierungsvorrichtung auf mindestens einer weiteren Kontaktierungsvorrichtung gestapelt ist, wobei das zu trennende Material durch die Eingangsöffnungen und die Ausgangsöffnungen zwischen den gestapelten Kontaktierungsvorrichtungen pendelt.

5. Mehrphasen-Kontaktierungsvorrichtung nach Anspruch 1, wobei die erste drehbare Scheibe und die zweite drehbare Scheibe dazu angeordnet sind, eine Zentrifugalbeschleunigung des zu trennenden Materials in der Kontaktierungsvorrichtung zu erzeugen, wenn sich die erste drehbare Scheibe und die zweite drehbare Scheibe drehen.

6. Mehrphasen-Kontaktierungsvorrichtung nach Anspruch 1, wobei
die erste drehbare Scheibe eine Gaseingangsöffnung umfasst, oder
die erste drehbare Scheibe Wärmeübertragungskanäle umfasst.

7. Mehrphasen-Kontaktierungsvorrichtung nach Anspruch 1, wobei die Kanäle in der zweiten drehbaren Scheibe dazu angeordnet sind, eine relativ leichte Phase von einer relativ schweren Phase in dem zu trennenden Material zu trennen, wobei sich die relativ leichte Phase zu der Drehachse bewegt, wobei sich die relativ schwere Phase radial nach außen bewegt.

8. Mehrphasen-Kontaktierungsvorrichtung nach Anspruch 1, wobei die Drehgeschwindigkeit von Eigenschaften des zu trennenden Materials, den Scheibenradien und dem Scheibenabstand abhängt.

9. Mehrphasen-Kontaktierungsvorrichtung nach Anspruch 1, wobei die zweite drehbare Scheibe ein Paar konzentrischer Scheibenblätter umfasst, die durch Wände der Kanäle getrennt sind.

10. Mehrphasen-Kontaktierungsvorrichtung nach Anspruch 9, wobei die gegenüberliegenden Scheibenblätter eine Trennungsentfernung von 0,05 mm oder mehr aufweisen.

11. Mehrphasen-Kontaktierungsvorrichtung nach Anspruch 9, wobei die gegenüberliegenden Scheibenblätter den gleichen Durchmesser oder unterschiedliche Durchmesser aufweisen.

12. Mehrphasen-Kontaktierungsvorrichtung nach Anspruch 1, wobei die Kanäle eine lineare oder nichtlineare Form aufweisen, die sich radial nach außen erstreckt.

13. Mehrphasen-Kontaktierungsvorrichtung nach Anspruch 1, wobei die erste drehbare Scheibe eine Wärmeeingangsöffnung umfasst.

14. Mehrphasen-Kontaktierungsvorrichtung nach Anspruch 1, wobei die erste drehbare Scheibe eine erste Ladungspolarität umfasst und die zweite drehbare Scheibe eine zweite Ladungspolarität aufweist, wobei die erste Ladungspolarität der zweiten Ladungspolarität entgegengesetzt ist.

15. Mehrphasen-Kontaktierungsvorrichtung nach Anspruch 1, die auf eine der folgenden Arten konfiguriert ist:
i) eine Oberfläche der ersten Scheibe, ii) eine Oberfläche der zweiten Scheibe oder i) und ii) umfassen einen Katalysator; oder
die erste Scheibenoberfläche oder die zweite Scheibenoberfläche umfasst Mikro strukturen.

## Revendications

1. Dispositif de mise en contact de type multiphase, comportant :
a. un premier disque rotatif, dans lequel ledit premier disque rotatif comporte une cavité creuse en forme de disque, un orifice d'entrée et un orifice de sortie ; et
b. un deuxième disque rotatif, dans lequel ledit deuxième disque rotatif comporte une cavité à canaux, un orifice d'entrée et un orifice de sortie, dans lequel ledit deuxième disque rotatif est disposé dans ladite cavité creuse en forme de disque dudit premier disque rotatif, dans lequel ledit premier disque rotatif et ledit deuxième disque rotatif sont concentriques autour d'un axe, dans lequel ledit dispositif de mise en contact de type multiphase sert à intégrer la séparation centrifuge et le transfert de masse à contrecourant d'un matériau soumis à des fins de séparation.

2. Dispositif de mise en contact de type multiphase selon la revendication 1, dans lequel
ledit premier disque rotatif et ledit deuxième disque rotatif tournent autour dudit axe et sont espacés l'un par rapport à l'autre sur ledit axe selon une distance pouvant descendre jusqu'à 0,05 mm, ou
un rotor est disposé entre ledit premier disque rotatif et ledit deuxième disque rotatif.

3. Dispositif de mise en contact de type multiphase selon la revendication 1, configuré selon l'une des manières suivantes :
ledit premier disque rotatif et ledit deuxième disque rotatif tournent à une vitesse pouvant atteindre jusqu'à 5000 tr/min ;
ledit premier disque rotatif tourne à une première vitesse et un deuxième disque rotatif tourne à une deuxième vitesse ; ou
ledit premier disque rotatif et ledit deuxième disque rotatif tournent en co-rotation ou en contre-rotation.

4. Dispositif de mise en contact de type multiphase selon la revendication 1, dans lequel un premier dit dispositif de mise en contact est empilé sur au moins un autre dit dispositif de mise en contact, dans lequel ledit matériau soumis à des fins de séparation se déplace entre lesdits dispositifs de mise en contact empilés au travers desdits orifices d'entrée et desdits orifices de sortie.

5. Dispositif de mise en contact de type multiphase selon la revendication 1, dans lequel ledit premier disque rotatif et ledit deuxième disque rotatif sont disposés pour générer une accélération centrifuge dudit matériau soumis à des fins de séparation à l'intérieur dudit dispositif de mise en contact quand ledit premier disque rotatif et ledit deuxième disque rotatif tournent.

6. Dispositif de mise en contact de type multiphase selon la revendication 1, dans lequel
ledit premier disque rotatif comporte un orifice d'entrée de gaz, ou
ledit premier disque rotatif comporte des canaux de transfert de chaleur.

7. Dispositif de mise en contact de type multiphase selon la revendication 1, dans lequel lesdits canaux dans ledit deuxième disque rotatif sont disposés pour séparer une phase relativement légère d'une phase relativement lourde dans ledit matériau soumis à des fins de séparation, dans lequel ladite phase relativement légère se déplace vers ledit axe de rotation, dans lequel ladite phase relativement lourde se déplace vers l'extérieur dans le sens radial.

8. Dispositif de mise en contact de type multiphase selon la revendication 1, dans lequel ladite vitesse de rotation est fonction des propriétés dudit matériau soumis à des fins de séparation, des rayons des disques, et de l'espacement des disques.

9. Dispositif de mise en contact de type multiphase selon la revendication 1, dans lequel ledit deuxième disque rotatif comporte une paire de plaques de disque concentriques séparées par des parois desdits canaux.

10. Dispositif de mise en contact de type multiphase selon la revendication 9, dans lequel lesdites plaques de disque opposées ont une distance de séparation pouvant descendre jusqu'à 0,05 mm.

11. Dispositif de mise en contact de type multiphase selon la revendication 9, dans lequel lesdites plaques de disque opposées ont le même diamètre ou des diamètres différents.

12. Dispositif de mise en contact de type multiphase selon la revendication 1, dans lequel lesdits canaux comportent une forme linéaire ou non linéaire s'étendant vers l'extérieur dans le sens radial.

13. Dispositif de mise en contact de type multiphase selon la revendication 1, dans lequel ledit premier disque rotatif comporte un orifice d'entrée de chaleur.

14. Dispositif de mise en contact de type multiphase selon la revendication 1, dans lequel ledit premier disque rotatif comporte une première polarité de charge et ledit deuxième disque rotatif comporte une deuxième polarité de charge, dans lequel ladite première polarité de charge est opposée à ladite deuxième polarité de charge.

15. Dispositif de mise en contact de type multiphase selon la revendication 1, configuré selon l'une des manières suivantes :
i) une surface dudit premier disque, ii) une surface dudit deuxième disque, ou i) et ii) comportent un catalyseur ; ou
ladite surface du premier disque ou ladite surface du deuxième disque comporte des microstructures.
